# EUROPEAN PATENT APPLICATION

(11) **EP 1 742 204 A1**
(43) Date of publication of application: **10.01.2007**
(21) Application number: 06013730.4
(22) Date of filing: 03.07.2006
(51) Int. Cl.: G11B 5/738

(54) **Magnetic recording medium**

(30) Priority: 04.07.2005 JP 2005194906
(71) Applicant: Fuji Photo Film Co., Ltd., Minami-Ashigara-shi, Kanagawa (JP)
(72) Inventor: Meguro, Katsuhiko, Odawara-shi, Kanagawa (JP); Harasawa, Takeshi, Odawara-shi, Kanagawa (JP); Takahashi, Masatoshi, Odawara-shi, Kanagawa (JP)
(74) Representative: HOFFMANN EITLE

(57) **Abstract**

A magnetic recording medium including: a nonmagnetic support; a conductive layer containing at least one material selected from the group consisting of: metals; semimetals; alloys; oxides of metals, semimetals and alloys; and composites of metals, semimetals and alloys; and a magnetic layer containing ferromagnetic powder and a binder, provided in this order, wherein a surface of the conductive layer has a surface electric resistance of is from 1×10² Ω/□ to 1×10¹² Ω/□.

## Description

### FIELD OF THE INVENTION

The present invention relates to a magnetic recording medium, specifically relates to a magnetic recording medium having a high S/N ratio capable of achieving excellent areal recording density, little in dropout and low in an error rate.

### BACKGROUND OF THE INVENTION

In the field of magnetic tape, with the prevalence of personal computers and work stations, magnetic recording media for recording computer data as external storage media have been eagerly studies. In putting magnetic recording media for such uses to practical use, the improvement of recording capacity has been strongly demanded conjointly with the miniaturization of a computer and the increase of throughput for satisfying high capacity recording and the miniaturization.

In recent years, reproduction heads that work with magnetoresistance (MR) as the principle of operation are proposed and get to be used in hard discs. Application of MR heads to magnetic tapes is also suggested in JP-A-8-227517 (the term "JP-A" as used herein refers to an "unexamined published Japanese patent application"). As compared with induction type magnetic heads, several times of reproduction output can be obtained with MR heads. Further, since an induction coil is not used in MR heads, noises generated from instruments, e.g., impedance noises, are largely reduced, therefore, it becomes possible to obtain a high S/N ratio by lowering the noise coming from magnetic recording media. In other words, it can be said that good recording and reproduction can be performed and high density recording characteristics can be drastically improved by lessening the noise of magnetic recording media hiding behind the noise of instruments.

Conventionally widely used magnetic recording media comprise a nonmagnetic support having coated thereon a magnetic layer containing an iron oxide, a Co-modified iron oxide, CrO₂, and ferromagnetic hexagonal ferrite powder dispersed in a binder. Above all, as magnetic powders, ferromagnetic metal powders and ferromagnetic hexagonal ferrite powders are known to be excellent in high density recording. For lessening the noise of magnetic recording media, it is effective to decrease the particle size of ferromagnetic powder, and ferromagnetic hexagonal ferrite fine particles having a tabular diameter of 40 nm or less and ferromagnetic metal fine powders having an average long axis length of 100 nm or less come to be used in recent magnetic media and bring about good effect.

For realizing higher recording density and higher recording capacity, the track width of a magnetic recording medium at the time of recording or reproducing is liable to be narrowed. Further, thinning of a magnetic tape is advancing in the field of magnetic tapes to make high density recording possible, and many magnetic tapes having a total thickness of 10 µm or less are now on the market. However, when the thickness of magnetic recording media is decreased, they are susceptible to the influences of temperature and humidity and fluctuations of tension during preservation or running.

That is, at the time of recording or reproducing of a magnetic recording or reproducing system adopting a linear recording system, a magnetic head shifts toward the width direction of a magnetic tape, and either track must be selected. However, with the narrowing of the track width, high precision is required to control the relative position of the magnetic tape and the magnetic head. Even if the S/N ratio using the MR head and fine particle magnetic substances as described above is improved and narrowing of track width is realized, there are cases where the magnetic recording medium is deformed due to environmental temperature and humidity under which the magnetic recording medium is used and the fluctuation of tension in the drive, and the reproducing head cannot read the recorded track, so that severer dimensional stability of the magnetic medium is required. In a magnetic recording medium to cope with such high density recording, further higher dimensional stability and mechanical strength than ever are required to maintain stable recording and reproducing.

Further, especially in a linear recording system, a magnetic tape runs almost parallel to a magnetic head and brought into contact with the magnetic head, so that dropout is liable to occur due to the spines on the surface of the magnetic layer. As another cause of dropout, adhesion of dusts in the use environment or in the drive, or dusts generated from the surface of the magnetic layer by scraping due to running on the magnetic recording medium is exemplified. The adhesion is caused by static electricity charged on the magnetic recording medium. On the other hand, an MR head is easily affected by static electricity and there is the possibility of breaking by static electricity. Accordingly, in a system mounting an MR head, it is necessary to destaticize the magnetic recording medium. As conventional destaticizing methods, methods of mixing electrically conductive fine particles such as carbon black in a magnetic layer or a nonmagnetic layer are known, but for maintaining the electric conductivity of not lower than a certain value, it is necessary to form a so-called structure of the primary particles of carbon black gathering in a certain degree. However, spines are formed on the surface of the magnetic layer due to the structure, which causes spacing loss and dropout, so that electromagnetic characteristics are decreased.

A magnetic recording medium that is controlled in surface electric resistance by blending an antistatic agent in a nonmagnetic support to thereby improve electromagnetic characteristics and running durability is disclosed in JP-A-6-333228. In the technique disclosed in JP-A-6-333228, as the antistatic agent a low molecular weight compound, e.g., sodium dodecylbenzenesulfonate, is added in the step of polymerization of a polymer constituting the nonmagnetic support or mixed after polymerization. However, when a nonmagnetic support containing such a low molecular weight antistatic agent is preserved, in particular preserved under high temperature high humidity conditions, the antistatic agent oozes to the nonmagnetic support surface, further to the magnetic layer surface.

A magnetic recording medium improved in mechanical strength and hygroscopicity by providing a film comprising any of a metal, an alloy and an amorphous alloy on the surface of a nonmagnetic support comprising a polymer film is disclosed in JP-B-7-43822 (the term "JP-B" as used herein refers to an "examined Japanese patent publication"). However, the antistatic agent obtained according to the technique as disclosed in JP-B-7-43822 is accompanied by the reduction of electromagnetic characteristics and partial abrasion of a head.

There is disclosed in JP-A-2002-269730 a magnetic recording medium little in dropout and excellent in running durability having a back coat film provided thereon a reinforcing film comprising a metal, a semimetal or an alloy, and the surface electric resistance is made 1 MΩ/sq or more, for the purpose of providing a magnetic recording medium for digital recording by helical scanning system. However, it has been found from the examination by the present inventors that, for improving electromagnetic characteristics in a coating type magnetic recording medium for use in the latest backup tape of computer, it is necessary to reduce the surface electric resistance of not only back coat surface side but also the magnetic layer surface.

### SUMMARY OF THE INVENTION

An object of the invention is to provide a magnetic recording medium having a high S/N ratio capable of achieving excellent areal recording density, little in dropout and low in an error rate.

The present invention is as follows.
1) A magnetic recording medium comprising a nonmagnetic support having provided at least on one side thereof a magnetic layer containing ferromagnetic powder and a binder, wherein a conductive layer (an electrically conductive layer) containing at least one material selected from the group consisting of metals, semimetals, alloys, and the oxides and composites of these materials is provided on the side of the nonmagnetic support on which the magnetic layer is provided, and the surface electric resistance of the surface of the electrically conductive layer is from 1×10² Ω/□ to 1×10¹² Ω/□.
2) The magnetic recording medium as described in the above item 1), wherein the magnetic layer is provided directly on the electrically conductive layer or via an adhesion assisting layer having a thickness of 0.1 µm or less.
3) The magnetic recording medium as described in the above item 2), wherein a nonmagnetic layer containing nonmagnetic powder and a binder is further provided between the electrically conductive layer and the magnetic layer, and the nonmagnetic layer does not substantially contain electrically conductive carbon black.

The invention can provide a magnetic recording medium having a high S/N ratio capable of achieving excellent areal recording density, little in dropout and low in an error rate by providing a specific electrically conductive layer on the side of the nonmagnetic support on which the magnetic layer is provided, and prescribing the surface electric resistance of the surface of the electrically conductive layer from 1×10² Ω/□ to 1×10¹² Ω/□.

### DETAILED DESCRIPTION OF THE INVENTION

The magnetic recording medium according to the invention is described in further detail below.

### I. Nonmagnetic Support

As the nonmagnetic supports, well known supports, e.g., biaxially stretched polyethylene naphthalate, polyethylene terephthalate, polyamide, polyimide, polyamideimide, aromatic polyamide, polybenzoxazole, etc., can be used in the invention. Preferably polyethylene terephthalate (PET) and polyethylene naphthalate (PEN) are exemplified. These nonmagnetic supports may be subjected to corona discharge treatment, plasma treatment, adhesion assisting treatment, or heat treatment in advance.

The crystallization of the PET or PEN support is from 40 to 60% in view of electromagnetic characteristics and dimensional stability, and preferably from 45 to 55%. Further, the stiff amorphous amount defined by the remaining amount by subtracting crystallinity (%) and amorphous ratio (%) from the whole as 100% is from 20 to 60% in view of electromagnetic characteristics and dimensional stability, and preferably from 25 to 50%.

The manufacturing methods of the nonmagnetic support in the invention are not especially restricted, but it is preferred to adjust dynamic strength in the machine direction and the transverse direction. Specifically, in forming the resin to a film, a method of stretching the film in the machine direction and the transverse direction is preferably used. The Young's modulus for use in the invention is from 4.4 to 15 GPa both in the machine direction and the transverse direction, and preferably from 5.5 to 11 GPa. The Young's modulus in the machine direction and the transverse direction may be different from each other. To adjust dynamic strength in the machine direction and the transverse direction, an unstretched film is biaxially stretched and biaxially oriented. As stretching method, a sequential biaxial stretching or simultaneous biaxial stretching method can be used. It is preferred to use a sequential biaxial stretching method of performing stretching in the machine direction in the first place, and then in the transverse direction, by dividing the stretching in the machine direction in three or more stages, and in the range of stretching temperature of from 80 to 180°C, total stretching magnification of from 3.0 to 6.0 times, and a stretching rate in the machine direction of from 5,000 to 50,000%/min. As the method of stretching in the transverse (cross) direction, a method of using a tenter is preferred, and the stretching temperature of from the glass transition temperature (Tg) to Tg + 100°C, the magnification of the stretching in the transverse direction of greater than the stretching in the machine direction according to cases, i.e., from 3.2 to 7.0 times, and a stretching rate in the transverse direction of from 1,000 to 20,000%/min are preferred. Further, if necessary, longitudinal and transverse re-stretching may be performed. Since stretching conditions of stretching magnification and stretching temperature greatly affect molecular orientation conditions, the glass transition temperature and the stiff amorphous amount together with the following described crystallinity are influenced, so that these conditions have to be appropriately selected for obtaining the biaxially oriented film of the invention.

The biaxially stretched film is then subjected to heat treatment. The heat treatment temperature in this case is preferably from cool crystallization temperature (Tc) + 40°C to Tc + 100°C, and treatment time is preferably from 0.5 to 60 seconds. Since the glass transition temperature and the stiff amorphous amount are influenced by these heat treatment conditions and the conditions in the process of returning to normal temperature after heat treatment, so that it is also necessary that these conditions have to be appropriately selected for obtaining the biaxially oriented film of the invention. Further, when the processing speed is fast and the shift to normal temperature is fast, the stiff amorphous amount is decreased, so that it is also effective to reduce the processing speed in order to increase the stiff amorphous amount.

It is also possible to increase the crystallinity and the stiff amorphous amount by performing heat treatment after film formation so that the temperature of the film at the time of forming an electrically conductive film described later is from Tc + 40 to Tc + 100°C, and controlling the cooling rate similarly to the film-forming time.

The central plane average surface roughness of the nonmagnetic support having the magnetic layer that can be used in the invention (JIS B0660-1998, ISO4287-1997) is from 1.8 to 9 nm at the cutoff value of 0.25 mm, and preferably from 2 to 8 nm. The surface roughness of both sides of the support may be different. The preferred thickness of the nonmagnetic support in the magnetic recording medium in the invention is from 3 to 60 µm.

### II. Electrically Conductive Layer

In the invention, an electrically conductive layer is provided on the side of a nonmagnetic support on which a magnetic layer is formed. If necessary, the electrically conductive layer may be provided on both sides of a nonmagnetic support.

The electrically conductive layer contains at least one material selected from the group consisting of metals, semimetals, alloys, and oxides and composites of these materials. Specifically, Al, Cu, Zn, Sn, Ni, Ag, Co, Fe, Mn, etc. are exemplified as the metals. As the semimetals, Si, Ge, As, Sc, Sb, etc., are exemplified. As the alloys, Fe-Co, Fe-Ni, Co-Ni, Fe-Co-Ni, Fe-Cu, Co-Cu, Co-Au, Co-Y, Co-La, Co-Pr, Co-Gd, Co-Sm, Co-Pt, Ni-Cu, Mn-Bi, Mn-Sb, Mn-Al, Fe-Cr, Co-Cr, Ni-Cr, Fe-Co-Cr, Ni-Co-Cr, etc., are exemplified. The oxides include partial oxides and are easily obtained by the introduction of oxygen gas in vacuum evaporation. As the composites, Fe-Si-O, Si-C, Si-N, Cu-Al-O, Si-N-O, Si-C-O, etc., are exemplified.

The forming methods of the electrically conductive layer are not restricted, but a vacuum evaporation method is generally used, and a sputtering method and an ion plating method can also be used as others.

The thickness of the electrically conductive layer is preferably from 20 to 500 nm, and more preferably from 50 to 300 nm. The electrically conductive layer may be a single layer or may take the structure of multilayer.

In the invention, it is especially preferred that the electrically conductive layer contains oxides of the materials selected from the metals, semimetals and alloys, and the distribution of oxygen concentration in the electrically conductive layer is higher in the vicinity of the interface of the magnetic layer side of the electrically conductive layer than in the central part in the electrically conductive layer. Further, it is more preferred that the distribution of oxygen concentration in the electrically conductive layer is higher in the vicinity of the interface of the magnetic layer side of the electrically conductive layer than in the central part in the electrically conductive layer, and at the same time oxygen concentration is also higher in the vicinity of the interface of the nonmagnetic support side of the electrically conductive layer. This constitution is preferred from the aspect of the stiffness of the magnetic recording medium. An electrically conductive layer having such oxygen distribution can be manufactured by forcible oxidation treatment of the surface with oxidizing gas during or after film forming, and controllable according to purposes. The oxygen concentration in an electrically conductive layer can be measured according to the analysis in the depth direction by Auger electron spectral analysis.

Here, the expression "the distribution of oxygen concentration is high" means that that place is relatively high in oxygen concentration as compared with other places and includes the case where the fluctuation of concentration is 10 atomic % or more.

Further, it is necessary in the invention that the surface electric resistance of the surface of the electrically conductive layer is from 1×10² Ω/□ to 1×10¹² Ω/□. When the surface electric resistance of the electrically conductive layer surface is less than 1×10² Ω/□, the degree of oxidation is insufficient and corrosion due to oxygen in the environment advances after a medium has been manufactured. Contrary to this, when the surface electric resistance exceeds 1×10¹² Ω/□, the electrically conductive layer is liable to be charged, so that the dusts in the environment are easily adhered and cause the increase in dropout. The charge also causes the breakage of an MR head.

The surface electric resistance is preferably from 1×10³ Ω/□ to 1×10¹¹ Ω/□, and more preferably from 1×10⁴ Ω/□ to 1×10¹⁰ Ω/□.

The surface electric resistance in the invention is a value measured according to the following method.

A nonmagnetic support having formed an electrically conductive layer is cut in a size of 12.65 mm wide and 10 cm long as a measuring sample. With a digital surface electric resistance meter TR-8611A (manufactured by Takeda Riken), the measuring environment is set at 21°C, 50% RH. Two quarter cylindrical metal electrodes having a radius of about 2 cm are put on an insulated horizontal plate at an interval of 12.65 mm, and the measuring sample is put on the plate so that the electrically conductive layer surface is brought into contact with the metal electrode side, and the electric resistance value R (Ω) at the time when a sash weight of 160 g is hung at both ends of the measuring sample is measured. The voltage to be applied between two electrodes is from 100 to 600 V. The surface electric resistance of the electrically conductive layer surface of the nonmagnetic support is found as R Ω/□.

### III. Magnetic Layer

### Ferromagnetic metal powder:

The ferromagnetic metal powders for use in a magnetic layer of the magnetic recording medium in the invention are known to be excellent in high density magnetic recording characteristics, so that a magnetic recording medium having excellent electromagnetic characteristics can be obtained. The average long axis length of the ferromagnetic metal powders for use in a magnetic layer of the magnetic recording medium in the invention is from 20 to 100 nm, preferably from 30 to 90 nm, and more preferably from 40 to 80 nm. When the average long axis length of the ferromagnetic metal powders is 20 nm or more, the reduction of magnetic characteristics due to thermal fluctuation can be effectively prevented. Further, when the average long axis length is 100 nm or less, a good S/N ratio can be obtained while maintaining noise at a low level.

The average long axis length of ferromagnetic metal powder can be found from the average value of the values obtained by a combined use of a method of taking photographs of ferromagnetic metal powder with a transmission electron microscope, and directly reading the short axis length and the long axis length of the ferromagnetic metal powder from the photographs, and a method of reading by tracing the transmission electron microphotographs with an image analyzer IBASSI (manufactured by Carl Zeiss Corp.).

Ferromagnetic metal powders for use in the magnetic layer of the magnetic recording medium in the invention are not especially restricted so long as they comprise Fe as the main component, but ferromagnetic alloy metal powders comprise α-Fe as the main component are preferred. These ferromagnetic metal powders may contain atoms, in addition to the prescribed atoms, e.g., Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr and B. Ferromagnetic metal powders containing at least one of Al, Si, Ca, Y, Ba, La, Nd, Co, Ni and B in addition to α-Fe are preferred, and those containing Co, Al or Y are particularly preferred. Further specifically, ferromagnetic metal powders containing from 10 to 40 atomic % of Co, from 2 to 20 atomic % of Al, and from 1 to 15 atomic % of Y, respectively based on Fe, are preferred.

Ferromagnetic metal powders may be treated with the later-described dispersants, lubricants, surfactants and antistatic agents in advance before dispersion. A small amount of water, hydroxide or oxide may be contained in ferromagnetic metal powders. Ferromagnetic metal powders preferably have a moisture content of from 0.01 to 2%. It is preferred to optimize the moisture content of ferromagnetic metal powders by selecting the kinds of binders. If necessary, ferromagnetic metal powders may be surface-treated with Al, Si, P, or oxides thereof. The amount of surface-treating compound is from 0.1 to 10% based on the amount of the ferromagnetic metal powders. By the surface treatment, the adsorption amount of lubricant, e.g. , fatty acid, becomes 100 mg/m² or less, and so preferred. It is preferred to optimize the pH of ferromagnetic metal powders by the combination with the binder to be used. The pH range is generally from 6 to 12, and preferably from 7 to 11. Ferromagnetic metal powders sometimes contain soluble inorganic ions of, e.g., Na, Ca, Fe, Ni, Sr, NH₄, SO₄, Cl, NO₂ and NO₃. It is preferred that inorganic ions are substantially not contained, but the properties of ferromagnetic powders are not especially influenced if the sum total of each ion is about 300 ppm or less. Ferromagnetic powders for use in the invention preferably have less voids and the value of the voids is preferably 20% by volume or less, and more preferably 5% by volume or less.

The crystallite size of ferromagnetic metal powders is preferably from 8 to 20 nm, more preferably from 10 to 18 nm, and still more preferably from 12 to 16 nm. The crystallite size is the average value obtained from the half value width of diffraction peak with an X-ray diffractometer (RINT 2000 series, manufactured by Rigaku Denki Co.) on the conditions of radiation source of CuKα1, tube voltage of 50 kV and tube current of 300 mA by a Scherrer method.

Ferromagnetic metal powders have a specific surface area (S_{BET}) measured by a BET method of preferably 30 m²/g or more and less than 50 m²/g, and more preferably from 38 to 48 m²/g. When the specific surface area of ferromagnetic metal powders is in this range, good surface properties are compatible with low noise.

Ferromagnetic metal powders are preferably acicular ferromagnetic powders. The average acicular ratio [the arithmetic mean of (long axis length/short axis length)] of ferromagnetic metal powders is preferably from 4 to 12, and more preferably from 5 to 12. The coercive force (Hc) of ferromagnetic metal powders is preferably from 159.2 to 238.8 kA/m, and more preferably from 167.2 to 230.8 kA/m. The saturation magnetic flux density of ferromagnetic metal powders is preferably from 150 to 300 mT, and more preferably from 160 to 290 mT. The saturation magnetization (σs) is preferably from 140 to 170 A·m²/kg, and more preferably from 145 to 160 A·m²/kg. SFD (Switching Field Distribution) of magnetic powders themselves is preferably small, preferably 0.8 or less. When SFD is 0.8 or less, electromagnetic characteristics are excellent, high output can be obtained, magnetic flux revolution becomes sharp and peak shift becomes small, therefore, suitable for high density digital magnetic recording. To achieve small Hc distribution, making particle size distribution of goethite in ferromagnetic metal powders good, using monodispersed α-Fe₂O₃, and preventing sintering among particles are effective methods.

Ferromagnetic metal powders manufactured by well-known methods can be used in the invention, and such methods include a method of reducing a water-containing iron oxide having been subjected to sintering preventing treatment, or an iron oxide with reducing gas, e.g., hydrogen, to thereby obtain Fe or Fe-Co particles; a method of reducing a composite organic acid salt (mainly an oxalate) with reducing gas, e.g. , hydrogen; a method of thermally decomposing a metal carbonyl compound; a method of reduction by adding a reducing agent, e.g., sodium boron hydride, hypophosphite or hydrazine, to an aqueous solution of a ferromagnetic metal; and a method of evaporating a metal in low pressure inert gas to thereby obtain fine powder. The thus-obtained ferromagnetic metal powders are subjected to well-known gradual oxidation treatment. As such treatment, a method of forming an oxide film on the surfaces of ferromagnetic metal powders by reducing a water-containing iron oxide or an iron oxide with reducing gas, e.g., hydrogen, and regulating partial pressure of oxygen-containing gas and inert gas, the temperature and the time is little in demagnetization and preferred.

### Ferromagnetic hexagonal ferrite powder:

Ferromagnetic hexagonal ferrite powders have a hexagonal magnetoplumbite structure, and have extremely great monoaxial crystal magnetic anisotropy, at the same time very high coercive force (Hc). Therefore, a magnetic recording medium using ferromagnetic hexagonal ferrite powders is excellent in chemical stability, corrosion resistance and friction resistance, capable of reduction of magnetic spacing loss resulting from the increase in density, realization of thin thinning, high C/N ratio and high resolution. The average tabular size of ferromagnetic hexagonal ferrite powders is from 5 to 40 nm, preferably from 10 to 38 nm, and more preferably from 15 to 36 nm. In general, when reproduction is performed by increasing track density and with a magneto-resistance head, it is necessary to lower noise and make the average tabular size of ferromagnetic hexagonal ferrite powders. In addition, from the viewpoint of reducing magnetic spacing loss, the average tabular size of ferromagnetic hexagonal ferrite powders is preferably as small as possible. However, when the average tabular size of ferromagnetic hexagonal ferrite powders is too small, magnetization becomes unstable due to thermal fluctuation. Accordingly, the greatest lower bound value of the average tabular size of the ferromagnetic hexagonal ferrite powders for use in the magnetic recording layer of the magnetic recording medium in the invention is defined as 5 nm. When the average tabular size is 5 nm or more, the influence of thermal fluctuation is little and stable magnetization can be obtained. On the other hand, the least upper bound value of the average tabular size of the ferromagnetic hexagonal ferrite powders is 40 nm. When the average tabular size is 40 nm or less, the reduction of electromagnetic characteristics due to increase in noise can be restrained, and it is especially preferred in the case where reproduction is performed with a magneto-resistance (MR) head. The average tabular size of ferromagnetic hexagonal ferrite powder can be found from the average value of the values obtained by a combined use of a method of taking photographs of ferromagnetic hexagonal ferrite powder with a transmission electron microscope, and directly reading the tabular size of the ferromagnetic hexagonal ferrite powder from the photographs, and a method of reading by tracing the transmission electron microphotographs with an image analyzer IBASSI (manufactured by Carl Zeiss Corp.).

The examples of ferromagnetic hexagonal ferrite powders contained in the magnetic recording medium in the invention include substitution products of each of barium ferrite, strontium ferrite, lead ferrite, and calcium ferrite, and Co-substitution products of these ferrites. Specifically describing, magnetoplumbite type barium ferrite and strontium ferrite, magnetoplumbite type ferrites having covered the particle surfaces with spinel, and magnetoplumbite type barium ferrite and strontium ferrite partially containing a spinel phase are exemplified. Hexagonal ferrite powders may contain, in addition to the prescribed atoms, the following atoms, e.g., Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge and Nb. In general, hexagonal ferrite powders containing the following elements can be used, e.g., Co-Zn, Co-Ti, Co-Ti-Zr, Co-Ti-Zn, Ni-Ti-Zn, Nb-Zn-Co, Sb-Zn-Co and Nb-Zn. According to starting materials and producing methods, specific impurities may be contained.

As described above, the particle size of ferromagnetic hexagonal ferrite powder is from 5 to 40 nm as the average tabular size, preferably from 10 to 38 nm, and more preferably from 15 to 36 nm. The average tabular thickness is from 1 to 30 nm, preferably from 2 to 25 nm, and more preferably from 3 to 20 nm. The average tabular ratio [the average of (tabular diameter/tabular thickness)] is from 1 to 15, and preferably from 1 to 7. When the tabular ratio is in the range of from 1 to 15, sufficient orientation can be attained while maintaining high packing density in a magnetic layer and, at the same time, the increase of noise due to stacking among particles can be prevented. The specific surface area measured by a BET method of particles in the above particle size range is from 10 to 200 m²/g. The specific surface area nearly coincides with the calculated value from the tabular diameter and the tabular thickness of a particle.

The distribution of tabular diameter·tabular thickness of ferromagnetic hexagonal ferrite powder particles is generally preferably as narrow as possible. It is difficult to show the distribution of tabular diameter-tabular thickness of particles in numerical values but the distributions can be compared by measuring 500 particles selected randomly from TEM photographs of particles. The distributions of tabular diameter·tabular thickness of particles are in many cases not regular distributions, but when expressed in the standard deviation to the average size by calculation, σ/average size is from 0.1 to 2.0. For obtaining narrow particle size distribution, it is efficient to make a particle-forming reaction system homogeneous as far as possible, and to subject particles formed to distribution improving treatment as well. For instance, a method of selectively dissolving superfine particles in an acid solution is also known.

The coercive force (Hc) of ferromagnetic hexagonal ferrite particles can be made from 159.2 to 238.8 kA/m, but is preferably from 175.1 to 222.9 kA/m, and more preferably from 183.1 to 214.9 kA/m. However, when the saturation magnetization (σs) of the head exceeds 1.4 T, it is preferred that Hc is 159.2 kA/m or less. Hc can be controlled by the particle size (tabular diameter·tabular thickness), the kinds and amounts of the elements contained in the ferromagnetic hexagonal ferrite powder, the substitution sites of the elements, and the particle-forming reaction conditions.

The saturation magnetization (σₛ) of ferromagnetic hexagonal ferrite particles is from 40 to 80 A·m²/kg. Saturation magnetization (σs) is preferably higher, but it has the inclination of becoming smaller as particles become finer. For the improvement of σₛ, compounding spinel ferrite to magnetoplumbite ferrite, and the selection of the kinds and the addition amount of elements to be contained are well known. It is also possible to use W-type hexagonal ferrite. In dispersing magnetic powders, the particle surfaces of magnetic particles may be treated with dispersion media and substances compatible with the polymers. Inorganic and organic compounds are used as surface-treating agents. For example, oxides or hydroxides of Si, Al and P, various kinds of silane coupling agents and various kinds of titanium coupling agents are primarily used as such compounds. The addition amount of these surface-treating agents is from 0.1 to 10 mass% based on the mass of the magnetic powder. The pH of magnetic powders is also important for dispersion, and the pH is generally from 4 to 12 or so. The optimal value of the pH is dependent upon the dispersion media and the polymers. Taking the chemical stability and preservation stability of the medium into consideration, pH of from 6 to 11 or so is selected. The moisture content in magnetic powders also affects dispersion. The optimal value of the moisture content is dependent upon the dispersion media and the polymers, and the moisture content of from 0.01 to 2.0% is selected in general.

The manufacturing methods of ferromagnetic hexagonal ferrite powders include the following methods and any of these methods can be used in the invention with no restriction: a glass crystallization method comprising the steps of mixing metallic oxide substituting barium oxide/iron oxide/iron and boron oxide as a glass-forming material so as to make a desired ferrite composition, melting and then quenching the ferrite composition to obtain an amorphous product, treating the amorphous product by reheating, washing and pulverizing to thereby obtain barium ferrite crystal powder; a hydrothermal reaction method comprising the steps of neutralizing a solution of barium ferrite composition metallic salt with an alkali, removing the byproducts produced, heating the liquid phase at 100°C or more, washing, drying and then pulverizing to thereby obtain barium ferrite crystal powder; and a coprecipitation method comprising the steps of neutralizing a solution of barium ferrite composition metallic salt with an alkali, removing the byproducts produced, drying, treating the reaction product at 1,100°C or less, and then pulverizing to obtain barium ferrite crystal powder. As described above, if necessary, ferromagnetic hexagonal ferrite powders may be subjected to surface treatment with Al, Si, P or oxides of them, and the amount of the surface-treating compound is from 0.1 to 10% based on the amount of the ferromagnetic powders. By the surface treatment, the adsorption amount of a lubricant, e.g., fatty acid, preferably becomes 100 mg/m² or less. Ferromagnetic hexagonal ferrite powders sometimes contain soluble inorganic ions of, e.g., Na, Ca, Fe, Ni and Sr, but it is preferred that these inorganic ions are not substantially contained, but the properties of hexagonal ferrite powders are not especially affected if the amount is 200 ppm or less.

### IV. Nonmagnetic Layer

It is preferred for the magnetic recording medium in the invention to be provided with a nonmagnetic layer containing nonmagnetic powder and a binder between the nonmagnetic support and the magnetic layer. The nonmagnetic powders that can be used in the nonmagnetic layer may be inorganic materials or organic materials. Carbon blacks can also be used in the nonmagnetic layer, but it is preferred in the invention not to contain substantially electrically conductive carbon blacks in the nonmagnetic layer, by which the formation of spines on the surface of the magnetic layer due to the structure of carbon black is prevented, so that the increase in an error rate can be restrained. Further, "substantially electrically conductive" used in the invention means not to cause troubles due to electric charge, and more specifically means not to adsorb dusts or break an MR head.

As the inorganic materials, e.g., metals, metallic oxides, metallic carbonates, metallic sulfates, metallic nitrides, metallic carbides, and metallic sulfides are exemplified.

Specifically, titanium oxide, e.g., titanium dioxide, cerium oxide, tin oxide, tungsten oxide, ZnO, ZrO₂, SiO₂, Cr₂O₃, α-alumina having an α-conversion rate of from 90% to 100%, β-alumina, γ-alumina, α-iron oxide, goethite, corundum, silicon nitride, titanium carbide, magnesium oxide, boron nitride, molybdenum disulfide, copper oxide, MgCO₃, CaCO₃, BaCO₃, SrCO₃, BaSO₄, silicon carbide, and titanium carbide can be used alone or in combination of two or more. α-Iron oxide and titanium oxide are preferred.

The shape of nonmagnetic powders may be any of an acicular, spherical, polyhedral or tabular shape. The crystallite size of nonmagnetic powders is preferably from 4nm to 1 µm, and more preferably from 40 to 100 nm. When the crystallite size of nonmagnetic powders is in the range of from 4 nm to 1 µm, dispersion can be performed easily, and preferred surface roughness can be obtained. The average particle size of nonmagnetic powders is preferably from 5 nm to 2 µm, but if necessary, a plurality of nonmagnetic powders each having a different particle size may be combined, or single nonmagnetic powder may have broad particle size distribution so as to attain the same effect as such a combination. Nonmagnetic powders particularly preferably have an average particle size of from 10 to 200 nm. When the average particle size is in the range of from 5 nm to 2 µm, preferred dispersibility and preferred surface roughness can be obtained.

Nonmagnetic powders have a specific surface area (S_{BET}) of from 1 to 100 m²/g, preferably from 5 to 70 m²/g, and more preferably from 10 to 65 m²/g. When the specific surface area is in the range of from 1 to 100 m²/g, preferred surface roughness can be secured and dispersion can be effected with a desired amount of a binder. Nonmagnetic powders have an oil absorption amount using dibutyl phthalate (DBP) of generally from 5 to 100 ml/100 g, preferably from 10 to 80 ml/100 g, and more preferably from 20 to 60 ml/100 g; a specific gravity of generally from 1 to 12, and preferably from 3 to 6; a tap density of generally from 0.05 to 2 g/ml, preferably from 0.2 to 1.5 g/ml, when the tap density is in the range of from 0.05 to 2 g/ml, particles hardly scatter, handling is easy, and the powders tend not to adhere to the apparatus; pH of preferably from 2 to 11, and especially preferably between 6 and 9, when the pH is in the range of from 2 to 11, the friction coefficient does not increase under high temperature and high humidity or due to liberation of fatty acid; a moisture content of generally from 0.1 to 5 mass%, preferably from 0.2 to 3 mass%, and more preferably from 0.3 to 1.5 mass%, when the moisture content is in the range of from 0.1 to 5 mass%, good dispersion is ensured and the viscosity of the coating solution after dispersion stabilizes. The ignition loss of nonmagnetic powders is preferably 20 mass% or less, and nonmagnetic powders showing small ignition loss are preferred.

When nonmagnetic powders are inorganic powders, Mohs' hardness is preferably from 4 to 10. When Mohs' hardness is in the range of from 4 to 10, durability can be secured. The nonmagnetic powders have a stearic acid adsorption amount of preferably from 1 to 20 µmol/m², more preferably from 2 to 15 µmol/m², and heat of wetting to water at 25°C of preferably from 200 to 600 erg/cm² (from 200 to 600 mJ/m²). Solvents in this range of heat of wetting can be used. The number of the molecules of water on the surface of the nonmagnetic powders at 100 to 400°C is preferably from 1 to 10/100Å. The pH of isoelectric point in water is preferably from 3 to 9. The surfaces of the nonmagnetic powders are preferably covered with Al₂O₃, SiO₂, TiO₂, ZrO₂, SnO₂, Sb₂O₃ or ZnO. Al₂O₃, SiO₂, TiO₂ and ZrO₂ are particularly preferred in dispersibility, and Al₂O₃, SiO₂ and ZrO₂ are still more preferred. These surface-covering compounds can be used in combination or can be used alone. According to purposes, nonmagnetic powder particles may have a layer subjected to surface treatment by coprecipitation. Alternatively, surfaces of particles may be covered with alumina previously, and then the alumina-covered surface may be covered with silica, or vice versa, according to purposes. A surface-covered layer may be a porous layer, if necessary, but a homogeneous and dense surface is generally preferred.

The specific examples of the nonmagnetic powders for use in a nonmagnetic layer according to the invention include Nanotite (manufactured by Showa Denko K.K.), HIT-100 and ZA-G1 (manufactured by Sumitomo Chemical Co., Ltd.), DPN-250, DPN-250BX, DPN-245, DPN-270BX, DPB-550BX and DPN-550RX (manufactured by Toda Kogyo Corp.), titanium oxide TTO-51B, TTO-55A, TTO-55B, TTO-55C, TTO-55S, TTO-55D, SN-100, MJ-7, α-iron oxide E270, E271 and E300 (manufactured by Ishihara Sangyo Kaisha Ltd.), STT-4D, STT-30D, STT-30 and STT-65C (manufactured by Titan Kogyo Kabushiki Kaisha), MT-100S, MT-100T, MT-150W, MT-500B, T-600B, T-100F and T-500HD (manufactured by TAYCA CORPORATION), FINEX-25, BF-1, BF-10, BF-20 and ST-M (manufactured by Sakai Chemical Industry Co., Ltd.), DEFIC-Y and DEFIC-R (manufactured by Dowa Mining Co., Ltd.), AS2BM and TiO₂ P25 (manufactured by Nippon Aerosil Co., Ltd.), 100A and 500A (manufactured by Ube Industries, Ltd.), and Y-LOP and calcined products of it (manufactured by Titan Kogyo Kabushiki Kaisha). Particularly preferred nonmagnetic powders are titanium dioxide and α-iron oxide.

Organic powders can be used in a nonmagnetic layer according to purpose. The examples of such organic powders include acryl styrene resin powders, benzoguanamine resin powders, melamine resin powders and phthalocyanine pigments. In addition, polyolefin resin powders, polyester resin powders, polyamide resin powders, polyimide resin powders and polyethylene fluoride resin powders can also be used.

### V. Binder

Conventionally well-known thermoplastic resins, thermosetting resins, reactive resins and the mixtures of these resins are used as the binders in a magnetic layer and a nonmagnetic layer in the invention. The examples of the thermoplastic resins include polymers and copolymers containing, as the constituting unit, vinyl chloride, vinyl acetate, vinyl alcohol, maleic acid, acrylic acid, acrylic ester, vinylidene chloride, acrylonitrile, methacrylic acid, methacrylic ester, styrene, butadiene, ethylene, vinyl butyral, vinyl acetal, or vinyl ether; polyurethane resins and various rubber resins.

The examples of thermosetting resins and reactive resins include phenolic resins, epoxy resins, curable type polyurethane resins, urea resins, melamine resins, alkyd resins, acrylic reactive resins, formaldehyde resins, silicone resins, epoxy-polyamide resins, mixtures of polyester resins and isocyanate prepolymers, mixtures of polyesterpolyol and polyisocyanate, and mixtures of polyurethane and polyisocyanate. Thermoplastic resins, thermosetting resins and reactive resins are described in detail in Plastic Handbook, Asakura Shoten.

When an electron beam-curable resin is used in a magnetic layer, not only film strength and durability are improved but also surface smoothness and electromagnetic characteristics are further improved.

The above resins can be used alone or in combination. It is especially preferred to use polyurethane resins. It is more preferred to use hydrogenated bisphenol A; polyurethane resins obtained by reacting a compound having a cyclic structure such as polypropylene oxide adduct of hydrogenated bisphenol A, polyol having an alkylene oxide chain and a molecular weight of from 500 to 5,000, polyol having a cyclic structure and a molecular weight of from 200 to 500 as the chain extender, and organic diisocyanate, and introducing a polar group thereto; polyurethane resins obtained by reacting aliphatic dibasic acid such as succinic acid, adipic acid or sebacic acid, polyester polyol comprising aliphatic diol having a branched alkyl side chain and not having a cyclic structure such as 2,2-dimethyl-1,3-propanediol, 2-ethyl-2-butyl-1,3- propanediol, or 2,2-diethyl-1,3-propanediol, aliphatic diol having a branched alkyl side chain and having 3 or more carbon atoms such as 2-ethyl-2-butyl-1, 3-propanediol or 2,2-diethyl-1,3-propanediol as the chain extender, and an organic diisocyanate compound, and introducing a polar group thereto; or polyurethane resins obtained by reacting a compound having a cyclic structure such as dimer diol, a polyol compound having a long alkyl chain, and organic diisocyanate, and introducing a polar group thereto.

The average molecular weight of the polar group-containing polyurethane resins for use in the invention is preferably from 5,000 to 100,000, and more preferably from 10,000 to 50,000. When the average molecular weight is 5,000 or more, a magnetic layer to be obtained is not accompanied by the reduction of physical strength, such as brittleness of the layer, and the durability of the magnetic recording medium is not influenced. While when the average molecular weight is 100,000 or less, the solubility in a solvent does not decrease, so that good dispersibility can be obtained, in addition, the coating viscosity in the prescribed concentration does not increase, so that good working properties can be obtained and handling is easy.

As the polar groups contained in the above polyurethane resins, -COOM, -SO₃M, -OSO₃M, -P=O(OM)₂, -O-P=O(OM)₂ (wherein M represents a hydrogen atom or an alkali metal salt group), -OH, -NR₂, -N⁺R₃ (wherein R represents a hydrocarbon group), an epoxy group, -SH and -CN are exemplified. Polyurethane resins to which one or more of these polar groups are introduced by copolymerization or addition reaction can be used. When these polar group-containing polyurethane resins have an OH group, to have a branched OH group is preferred from the aspects of curability and durability, to have from 2 to 40 branched OH groups per a molecule is preferred, and to have from 3 to 20 branched OH groups per a molecule is more preferred. The amount of these polar groups is from 10⁻¹ to 10⁻⁸ mol/g, and preferably from 10⁻² to 10⁻⁶ mol/g.

The specific examples of the binders include VAGH, VYHH, VMCH, VAGF, VAGD, VROH, VYES, VYNC, VMCC, XYHL, XYSG, PKHH, PKHJ, PKHC and PKFE (manufactured by Dow Chemical Company), MPR-TA, MPR-TA5, MPR-TAL, MPR-TSN, MPR-TMF, MPR-TS, MPR-TM and MPR-TAO (manufactured by Nisshin Chemical Industry Co. , Ltd.), 1000W, DX80, DX81, DX82, DX83 and 100FD (manufactured by Electro Chemical Industry Co., Ltd.), MR-104, MR-105, MR-110, MR-100, MR-555 and 400X-110A (manufactured by Nippon Zeon Co., Ltd.), Nippollan N2301, N2302 and N2304 (manufactured by Nippon Polyurethane Industry Co., Ltd.), Pandex T-5105, T-R3080, T-5201, Burnock D-400, D-210-80, Crisvon 6109 and 7209 (manufactured by Dainippon Ink and Chemicals Inc.), Vylon UR8200, UR8300, UR8700, RV530 and RV280 (manufactured by Toyobo Co., Ltd.), Daipheramine 4020, 5020, 5100, 5300, 9020, 9022 and 7020 (manufactured by Dainichiseika Color & Chemicals Mfg. Co., Ltd), MX5004 (manufactured by Mitsubishi Chemical Corporation), Sanprene SP-150 (manufactured by Sanyo Chemical Industries, Ltd.), Saran F310 and F210 (manufactured by Asahi Kasei Corporation).

The addition amount of the binders for use in a magnetic layer or a nonmagnetic layer in the invention is from 5 to 50 mass%, and preferably from 10 to 30 mass%, based on the mass of the ferromagnetic powder (ferromagnetic metal powder or ferromagnetic hexagonal ferrite powder) or the nonmagnetic powder. When polyurethane resins are used in a magnetic layer, the amount is from 2 to 20 mass% based on the ferromagnetic powder, when polyisocyanate is used, the amount is from 2 to 20 mass%, and it is preferred to use them in combination, however, for instance, when corrosion of the head is caused by a slight amount of chlorine due to deehlorination, it is possible to use polyurethane alone or a combination of polyurethane and isocyanate alone. When a vinyl chloride resin is used as other resin, the addition amount is preferably from 5 to 30 mass%. When polyurethane is used in the invention, the polyurethane has a glass transition temperature of preferably from -50 to 150°C, more preferably from 0 to 100°C, a breaking extension of preferably from 100 to 2,000%, a breaking stress of preferably from 0.49 to 98 MPa, and a yielding point of preferably from 0.49 to 98 MPa.

The magnetic recording medium in the invention preferably comprises a nonmagnetic layer and at least one magnetic layer. Accordingly, the amount of a binder, the amounts of a vinyl chloride resin, a polyurethane resin, polyisocyanate or other resins contained in the binder, the molecular weight of each resin constituting the magnetic layer, the amount of a polar group, or the above described physical properties of resins can of course be varied in the nonmagnetic layer and the magnetic layer according to necessity. These factors should be rather optimized in each layer, and well-known prior art with respect to multilayer magnetic layers can be used in the present invention. For example, when the amount of a binder is varied in each layer, it is effective to increase the amount of the binder contained in the magnetic layer in order to reduce scratches on the surface of the magnetic layer. For improving the head touch against a head, it is effective to increase the amount of the binder in the nonmagnetic layer to impart flexibility.

The examples of polyisocyanates usable in the invention include isocyanates, e.g., tolylene diisocyanate, 4,4'-diphenylmethane diisocyanate, hexamethylene diisocyanate, xylylene diisocyanate, naphthylene-1,5-diisocyanate, o-toluidine diisocyanate, isophorone diisocyanate, and triphenylmethane triisocyanate; products of these isocyanates with polyalcohols; and polyisocyanates formed by condensation reaction of isocyanates. These isocyanates are commercially available under the trade names of Coronate L, Coronate HL, Coronate 2030, Coronate 2031, Millionate MR, and Millionate MTL (manufactured by Nippon Polyurethane Industry Co., Ltd.), Takenate D-102, Takenate D-110N, Takenate D-200, and Takenate D-202 (manufactured by Takeda Chemical Industries, Ltd.), and Desmodur L, Desmodur IL, Desmodur N, and Desmodur HL (manufactured by Sumitomo Bayer Co., Ltd.). These compounds may be used alone, or in combination of two or more in each layer taking advantage of the difference in curing reactivity.

### VI. Other additives

Additives can be added to a magnetic layer in the invention according to necessity. As the additives, an abrasive, a lubricant, a dispersant, an antifungal agent, an antistatic agent, an antioxidant, a solvent, and carbon black can be exemplified.

The examples of such additives include molybdenum disulfide, tungsten disulfide, graphite, boron nitride, graphite fluoride, silicone oil, silicone having a polar group, fatty acid-modified silicone, fluorine-containing silicone, fluorine-containing alcohol, fluorine-containing ester, polyolefin, polyglycol, polyphenyl ether, aromatic ring- containing organic phosphonic acids, e.g., phenylphosphonic acid, and alkali metal salts thereof, alkylphosphonic acids, e.g., octylphosphonic acid, and alkali metal salts thereof, aromatic phosphoric esters, e.g., phenyl phosphate, and alkali metal salts thereof, alkylphosphoric esters, e.g. , octyl phosphate, and alkali metal salts thereof, alkylsulfonic esters and alkali metal salts thereof, fluorine-containing alkylsulfuric esters and alkali metal salts thereof, monobasic fatty acids having from 10 to 24 carbon atoms which may contain an unsaturated bond or may be branched, e.g. , lauric acid, and alkali metal salts thereof, fatty acid monoesters, fatty acid diesters and polyhydric fatty acid esters composed of monobasic fatty acid having from 10 to 24 carbon atoms which may contain an unsaturated bond or may be branched, and any one of mono-, di-, tri-, tetra-, penta- or hexa-alcohols having from 2 to 22 carbon atoms which may contain an unsaturated bond or may be branched, alkoxy alcohols having from 12 to 22 carbon atoms which may contain an unsaturated bond or may be branched, or monoalkyl ether of alkylene oxide polymerized products, fatty acid amides having from 2 to 22 carbon atoms, and aliphatic amines having from 8 to 22 carbon atoms. Besides the above hydrocarbon groups, those having a nitro group, an alkyl, aryl, or aralkyl group substituted with a group other than a hydrocarbon group, such as halogen-containing hydrocarbon, e.g., F, Cl, Br, CF₃, CCl₃, CBr₃, may be used. In addition, nonionic surfactants, e.g., alkylene oxide, glycerol, glycidol, alkylphenol ethylene oxide adducts, etc., cationic surfactants, e.g., cyclic amine, ester amide, quaternary ammonium salts, hydantoin derivatives, heterocyclic rings, phosphoniums and sulfoniums, anionic surfactants containing an acid group, e.g., carboxylic acid, sulfonic acid or a sulfuric ester group, and amphoteric surfactants, e.g., amino acids, aminosulfonic acids, sulfuric or phosphoric esters of amino alcohol, alkylbetaine, etc., can also be used.

The details of these surfactants are described in Kaimen Kasseizai Binran (Handbook of Surfactants), Sangyo Tosho Publishing Co., Ltd. These additives need not be 100% pure and may contain impurities such as isomers, unreacted products, side reaction products, decomposed products and oxides, in addition to the main components. However, the content of such impurities is preferably 30 mass% or less, and more preferably 10 mass% or less. As the specific examples of these additives, e.g., NAA-102, castor oil hardened fatty acid, NAA-42, Cation SA, Naimeen L-201, Nonion E-208, Anon BF and Anon LG (manufactured by Nippon Oils and Fats Co., Ltd.), FAL-205 and FAL-123 (manufactured by Takemoto Oil & Fat), Enujerubu OL (manufactured by New Japan Chemical Co., Ltd.), TA-3 (manufactured by Shin-Etsu Chemical Co., Ltd.), Armide P, Duomeen TDO (manufactured by Lion Corporation), BA-41G (manufactured by The Nisshin OilliO Group, Ltd.), Profan 2012E, Newpole PE61 and Ionet MS-400 (manufactured by Sanyo Chemical Industries Ltd.) are exemplified.

Desired micro Vickers' hardness can be obtained by the mixture of carbon blacks to a magnetic layer and a nonmagnetic layer in the invention in addition to the reduction of surface electrical resistance. Micro Vickers' hardness is generally from 25 to 60 kg/mm² (from 245 to 588 MPa), preferably from 30 to 50 kg/mm² (from 294 to 490 MPa) for adjusting the head touch. Micro Vickers' hardness can be measured using a triangular pyramid diamond needle having sharpness of 80° and a tip radius of 0.1 µm attached at the tip of an indenter using a membrane hardness meter HMA-400 (manufactured by NEC Corporation) . As carbon blacks that can be used in a magnetic layer and a nonmagnetic layer, furnace blacks for rubbers, thermal blacks for rubbers, carbon blacks for coloring, and acetylene blacks can be used.

The carbon blacks preferably have a specific surface area of from 5 to 500 m²/g, a DBP oil absorption amount of from 10 to 400 ml/100 g, a particle size of from 5 to 300 nm, pH of from 2 to 10, a moisture content of from 0.1 to 10%, and a tap density of from 0.1 to 1 g/ml. The specific examples of the carbon blacks that can be used in the invention include BLACKPEARLS 2000, 1300, 1000, 900, 905, 800, 700, and VULCAN XC-72 (manufactured by Cabot Co., Ltd.), #80, #60, #55, #50 and #35 (manufactured by ASAHI CARBON CO., LTD.), #3050B, #3150B, #3250B, #3750B, #3950B, #2400B, #2300, #1000, #970B, #950, #900, #850B, #650B, #30, #40, #10B, and MA-600 (manufactured by Mitsubishi Chemical Corporation), CONDUCTEX SC, RAVEN 8800, 8000, 7000, 5750, 5250, 3500, 2100, 2000, 1800, 1500, 1255, 1250, 150, 50, 40, 15, andRAVEN-MT-P (manufactured by Columbia Carbon Co., Ltd.), and Ketjen Black EC (manufactured by Ketjen Black International).

The surfaces of carbon blacks may be treated with a dispersant, may be grafted with resins, or a part of the surface may be graphitized before use. The carbon blacks may be previously dispersed in a binder before being added to a magnetic coating solution. These carbon blacks can be used alone or in combination. It is preferred to use the carbon blacks in an amount of from 0.1 to 30 mass% based on the mass of the magnetic powder. The carbon blacks can serve various functions such as preventing the static charge and reducing the friction coefficient of a magnetic layer, imparting a light-shielding property, and improving the film strength. Such functions vary by the kind of the carbon black to be used. Accordingly, it is of course possible in the invention to select and determine the kinds, amounts and combinations of the carbon blacks to be added to a magnetic layer and a nonmagnetic layer, on the basis of the above described various properties such as the particle size, the oil absorption amount, the electrical conductance and the pH value, or these should be rather optimized in each layer. With respect to the carbon blacks usable in a magnetic layer of the invention, Carbon Black Binran (Handbook of Carbon Blacks) (edited by Carbon Black Association) can be referred to.

As described above, it is preferred in the invention that a nonmagnetic layer does not substantially contain electrically conductive carbon blacks.

Well-known organic solvents can be used in the invention. Organic solvents are used in an optional rate in the invention. The examples of the organic solvents for use in the invention include ketones, e.g., acetone, methyl ethyl ketone, methyl isobutyl ketone, diisobutyl ketone, cyclohexanone, isophorone and tetrahydrofuran; alcohols, e.g., methanol, ethanol, propanol, butanol, isobutyl alcohol, isopropyl alcohol and methylcyclohexanol; esters, e.g., methyl acetate, butyl acetate, isobutyl acetate, isopropyl acetate, ethyl lactate, and glycol acetate; glycol ethers, e.g., glycol dimethyl ether, glycol monoethyl ether and dioxane; aromatic hydrocarbons, e.g., benzene, toluene, xylene, cresol and chlorobenzene; chlorinated hydrocarbons, e.g., methylene chloride, ethylene chloride, carbon tetrachloride, chloroform, ethylene chlorohydrin and dichlorobenzene; and N,N-dimethylformamide and hexane. These organic solvents need not be 100% pure and they may contain impurities such as isomers, unreacted products, side reaction products, decomposed products, oxides, and water in addition to their main components. However, the content of such impurities is preferably 30 mass% or less, and more preferably 10 mass% or less. It is preferred that the same kind of organic solvents are used in a magnetic layer and a nonmagnetic layer, but the addition amounts may differ. It is preferred to use organic solvents having high surface tension (such as cyclohexanone, dioxane and the like) in a nonmagnetic layer to thereby increase coating stability. Specifically, it is important for the arithmetic mean value of the composition of the solvents in a magnetic layer not to be lower than the arithmetic mean value of the composition of the solvents in a nonmagnetic layer. In order to improve dispersibility, the porality is preferably strong in a certain degree, and it is preferred that solvents having a dielectric constant of 15 or more account for 50% or more of the composition of the solvents. The dissolution parameter is preferably from 8 to 11.

The kinds and the amounts of these additives for use in the invention can be used properly in a magnetic layer and a nonmagnetic layer according to necessity. For example, although these are not limited to the examples described here, dispersants have a property of adsorbing or bonding by the polar groups, and dispersants are adsorbed or bonded by the polar groups mainly to the surfaces of ferromagnetic powder particles in a magnetic layer and mainly to the surfaces of nonmagnetic powder particles in a nonmagnetic layer, and it is supposed that an organic phosphorus compound once adsorbed is hardly desorbed from the surface of metal or metallic compound. Accordingly, the surfaces of ferromagnetic powders (ferromagnetic metal powders and ferromagnetic hexagonal ferrite powders) or nonmagnetic powders are in the state of being covered with alkyl groups or aromatic groups, so that the affinity of the ferromagnetic powders or nonmagnetic powders to the binder resin is improved, and further the dispersion stability of the ferromagnetic powders or nonmagnetic powders is also improved. In addition, since lubricants are present in a free state, it is effective to use fatty acids each having a different melting point in a nonmagnetic layer and a magnetic layer so as to prevent bleeding out of the fatty acids to the surface, or esters each having a different boiling point and a different polarity so as to prevent bleeding out of the esters to the surface. Also, the amount of surfactants is controlled so as to improve the coating stability, or the amount of a lubricant in a nonmagnetic layer is made larger so as to improve the lubricating effect. All or a part of the additives to be used in the invention may be added to a magnetic coating solution or a nonmagnetic coating solution in any step of preparation. For instance, additives may be blended with ferromagnetic powder before a kneading step, may be added in a step of kneading ferromagnetic powder, a binder and a solvent, may be added in a dispersing step, may be added after a dispersing step, or may be added just before coating.

### VII. Back Coat Layer, Adhesion Assisting Layer

In general, the magnetic tapes for computer data recording are strongly required to have repeating running durability as compared with videotapes and audiotapes. In order to maintain such high running durability, it is possible to provide a back coat layer on the side of a nonmagnetic support opposite to the side on which a nonmagnetic layer and a magnetic layer are provided. A back coat layer coating solution is prepared by dispersing an abrasive, an antistatic agent and a binder in an organic solvent. As granular components, various kinds of inorganic pigments and carbon blacks can be used. As binders, resins, e.g., nitrocellulose, phenoxy resins, vinyl chloride resins, and polyurethane can be used alone or as a mixture.

In the invention, for heightening the adhesion of an electrically conductive layer and a magnetic layer, an adhesion assisting layer may intervene between these layers. Further, for increasing the adhesion of a nonmagnetic support and a back coat layer, an adhesion assisting layer may be provided between them. As the adhesion assisting layer, materials soluble in a solvent, e.g., the following materials can be exemplified, e.g., polyester resins, polyamide resins, polyamideimide resins, polyurethane resins, vinyl chloride resins, vinylidene chloride resins, phenolic resins, epoxy resins, urea resins, melamine resins, formaldehyde resins, silicone resins, starch, modified starch compounds, alginic acid compounds, casein, gelatin, pullulan, dextran, chitin, chitosan, rubber latex, gum arabic, *funori,* natural rubber, dextrin, modified cellulose resins, polyvinyl alcohol resins, polyethylene oxide, polyacrylic acid resins, polyvinyl pyrrolidone, polyethyleneimine, polyvinyl ether, polymaleic acid copolymers, polyacrylamide, and alkyd resins are exemplified.

The thickness of an adhesion assisting layer between an electrically conductive layer and a magnetic layer is 0.1 µm or less, preferably from 0.001 to 0.08 µm, and more preferably from 0.002 to 0.06 µm. When the thickness of an adhesion assisting layer exceeds 0.1 µm, the adhesion assisting layer functions as an insulating layer, so that the effect of reducing the surface electric resistance of the electrically conductive layer lowers.

The thickness of an adhesion assisting layer between a nonmagnetic support and a back coat layer is not especially restricted so long as the thickness is from 0.01 to 3.0 µm, preferably from 0.02 to 2.0 µm, and more preferably from 0.05 to 1.5 µm. The glass transition temperature of the resin used in the adhesion assisting layer is preferably from 30 to 120°C, and more preferably from 40 to 80°C. When the thickness is 0°C or higher, blocking at the end face does not occur, and when 120°C or lower, the internal stress of the adhesion assisting layer can be relaxed and excellent adhesion can be secured.

### VIII. Layer Structure

It is preferred that the magnetic recording medium in the invention comprises a nonmagnetic support having provided on at least one side at least two layers, i.e., a nonmagnetic layer and a magnetic layer on the nonmagnetic layer. The magnetic layer may comprise two or more layers, if necessary. Further, a back coat layer is provided on the opposite side of the nonmagnetic support according to necessity. The magnetic recording medium in the invention may be provided with a lubricating layer or various layers on the magnetic layer for the protection of the magnetic layer. In addition, as described above, an undercoat layer (an adhesion assisting layer) may be provided between a nonmagnetic support and a nonmagnetic layer for the purpose of the improvement of the layer and the nonmagnetic support.

The magnetic recording medium in the invention may also take the structure having a nonmagnetic layer and a magnetic layer on both sides of a nonmagnetic support. A magnetic layer (an upper layer) can be formed after a nonmagnetic layer (a lower layer) has been coated and while the lower layer is still wet or after being dried. From production yield, simultaneous or successive wet coating is preferred, but in a case of a disc-like magnetic recording medium, coating after drying can be sufficiently used. In a multilayer structure in the invention, an upper layer and a lower layer can be formed at the same time by simultaneous or successive wet coating, so that surface treatment process such as calendering treatment can be effectively utilized and the surface roughness of an upper magnetic layer can be bettered even the layer is a hyper thin layer.

The thickness of the nonmagnetic support of the magnetic recording medium for use in the invention is preferably from 3 to 80 µm. As the nonmagnetic support of a magnetic tape, the thickness of from 3.5 to 7.5 µm, preferably from 3 to 7 µm is used. When an undercoat layer is provided between a nonmagnetic support and a nonmagnetic layer or a magnetic layer, the thickness of the undercoat layer is from 0.01 to 0.8 µm, and preferably from 0.02 to 0.6 µm. The thickness of a back coat layer that is provided on a nonmagnetic support opposite to the side on which a nonmagnetic layer and a magnetic layer are provided is from 0.1 to 1.0 µm, preferably from 0.2 to 0.8 µm.

The thickness of a magnetic layer is optimized according to the amount of saturation magnetization of the head used, the head gap length, and the recording signal zone, and is generally from 10 to 100 nm, preferably from 20 to 80 nm, and more preferably from 30 to 80 nm. The fluctuation of a magnetic layer thickness is preferably not more than ±50%, and more preferably not more than ±40%. A magnetic layer comprises at least one layer, or may be separated to two or more layers each having different magnetic characteristics, and well-known constitutions of multilayer magnetic layers can be used in the invention.

The thickness of a nonmagnetic layer in the invention is generally from 0.02 to 3.0 µm, preferably from 0.05 to 2.5 µm, and more preferably from 0.1 to 2.0 µm. A nonmagnetic layer of the magnetic recording medium in the invention exhibits the effect of the invention so long as it is substantially a nonmagnetic layer even if, or intentionally, it contains a small amount of magnetic powder as impurity, which can be regarded as essentially the same constitution as the magnetic recording medium in the invention. The term "essentially the same constitution" means that the residual magnetic flux density of the nonmagnetic layer is 10 mT (100 G) or less or the coercive force of the nonmagnetic layer is 7.96 kA/m (100 Oe) or less, preferably the residual magnetic flux density and the coercive force are zero.

### IX. Physical Properties

The saturation magnetic flux density of a magnetic layer of the magnetic recording medium for use in the invention is preferably from 100 to 300 mT. The coercive force (Hc) of the magnetic layer is from 143.3 to 318.4 kA/m, and preferably from 159.2 to 278.6 kA/m. The coercive force distribution is preferably narrow, and SFD and SFDr are preferably 0. 6 or less, and more preferably 0.2 or less.

The magnetic recording medium in the invention has a friction coefficient against a head at temperature of -10°C to 40 °C and humidity of 0% to 95% of 0.5 or less, and preferably 0.3 or less, surface specific resistance is preferably from 10⁴ to 10¹² Ω/sq, and charge potential of preferably from -500 V to +500 V. The elastic modulus at 0.5% elongation of the magnetic layer is preferably from 0.98 to 19.6 GPa in every direction of in-plane, the breaking strength is preferably from 98 to 686 MPa, the elastic modulus of the magnetic recording medium is preferably from 0.98 to 14.7 GPa in every direction of in-plane, the residual elongation is preferably 0.5% or less, and a thermal shrinkage factor at every temperature of 100°C or less is preferably 1% or less, more preferably 0.5% or less, and most preferably 0.2% or less.

The glass transition temperature of the magnetic layer (the maximum point of the loss elastic modulus by dynamic viscoelasticity measurement measured at 110 Hz) is preferably from 50 to 180°C, and that of the nonmagnetic layer is preferably from 0 to 180°C. The loss elastic modulus is preferably in the range of from 1x10⁷ to 8x10⁸ Pa, and loss tangent is preferably 0.2 or less. When loss tangent is too large, adhesion failure is liable to occur. These thermal and mechanical characteristics are preferably almost equal in every direction of in-plane of the medium with difference of not more than 10%.

The residual amount of a solvent in the magnetic layer is preferably 100 mg/m² or less, and more preferably 10 mg/m² or less. The void ratio of a coated layer is preferably 30% by volume or less, and more preferably 20% by volume or less, with both of the nonmagnetic layer and the magnetic layer. The void ratio is preferably smaller for obtaining high output but in some cases a specific value should be preferably secured depending on purposes. For example, in a disc medium that is repeatedly used, a large void ratio contributes to good running durability in many cases.

The magnetic layer preferably has a maximum height (SRₘₐₓ) of 0.5 µm or less, a ten point average roughness (SRz) of 0.3 µm or less, a central plane peak height (SRp) of 0.3 µm or less, a central plane valley depth (SRv) of 0.3 µm or less, a central plane area factor (SSr) of from 20 to 80%, and an average wavelength (Sλa) of from 5 to 300 µm. These values can be easily controlled by the control of the surface property of a support by using fillers or by the surface configurations of the rolls of calender treatment. Curling is preferably within ±3 mm.

These physical characteristics can be varied according to purposes between the nonmagnetic layer and the magnetic layer in the magnetic recording medium in the invention. For example, the elastic modulus of the magnetic layer is made higher to improve running durability and at the same time the elastic modulus of the nonmagnetic layer is made lower than that of the magnetic layer to improve the head touching of the magnetic recording medium.

### X. Manufacturing Method

The manufacturing process of a magnetic layer coating solution of the magnetic recording medium in the invention comprises at least a kneading step, a dispersing step and a blending step to be carried out optionally before and/or after the kneading and dispersing steps. Each of these steps may be composed of two or more separate stages. All the charge stocks for use in the invention such as hexagonal ferrite ferromagnetic powder or ferromagnetic metal powder, nonmagnetic powder, a binder, a carbon black, an abrasive, an antistatic agent, a lubricant and a solvent may be added at any step at any time. Each charge stock may be added at two or more steps dividedly. For example, polyurethane may be added dividedly at a kneading step, a dispersing step, and a blending step for adjusting viscosity after dispersion. For achieving the object of the invention, conventionally well known techniques can be used partly with the above steps. It is preferred to use powerful kneading machines such as an open kneader, a continuous kneader, a pressure kneader or an extruder in a kneading step. These kneading treatments are disclosed in detail in JP-A-1-106338 and JP-A-1-79274. For dispersing a magnetic layer coating solution and a nonmagnetic layer coating solution, glass beads can be used, but dispersing media having a higher specific gravity, e.g., zirconia beads, titania beads and steel beads are preferably used. Optimal particle size and packing density of these dispersing media have to be selected. Well-known dispersers can be used in the invention.

In the manufacturing method of the magnetic recording medium in the invention, a magnetic layer is formed by coating a magnetic layer coating solution in a prescribed thickness on the surface of a nonmagnetic support under running. A plurality of magnetic layer coating solutions may be successively or simultaneously multilayer-coated, or a nonmagnetic layer coating solution and a magnetic layer coating solution may be successively or simultaneously multilayer-coated. Air doctor coating, blade coating, rod coating, extrusion coating, air knife coating, squeeze coating, immersion coating, reverse roll coating, transfer roll coating, gravure coating, kiss coating, cast coating, spray coating and spin coating can be used for coating the above magnetic layer coating solution or nonmagnetic layer coating solution. These coating methods are described, e.g., in Saishin Coating Gijutsu (The Latest Coating Techniques), Sogo Gijutsu Center Co. (May 31, 1983).

In the case of a magnetic tape, the ferromagnetic powder contained in a coated layer of a magnetic layer coating solution is subjected to the treatment of magnetic field orientation in the machine direction with a cobalt magnet and a solenoid. In the case of a magnetic disc, an isotropic orientation property can be sufficiently obtained according to cases without performing orientation with orientation apparatus, but it is preferred to use well-known random orientation apparatus, e.g., disposing cobalt magnets diagonally and alternately or applying an alternating current magnetic field with a solenoid. Isotropic orientation in the case of ferromagnetic metal powder is generally preferably in-plane two dimensional random orientation, but it is also possible to make three dimensional random orientation by applying perpendicular factors. Ferromagnetic hexagonal ferrite powders generally have an inclination for in-plane and perpendicular three-dimensional random orientation, but it is also possible to make in-plane two dimensional random orientation. It is also possible to impart isotropic magnetic characteristics in the circumferential direction by perpendicular orientation with well-known methods, e.g., using different pole and counter position magnets. In particular, when the disc is used in high density recording, perpendicular orientation is preferred. Circumferential orientation can also be performed using spin coating.

It is preferred that the drying position of a coated film be controlled by the control of the temperature and the amount of drying air and a coating rate. A coating rate is preferably from 20 to 1,000 m/min, and the temperature of drying air is preferably 60°C or higher. A proper degree of preliminary drying can be performed before entering a magnet zone.

After drying, the coated layer is subjected to surface smoothing treatment with, e.g., a super calender roll and the like. The voids generated by the removal of the solvent in drying disappear by the surface smoothing treatment and the packing rate of the ferromagnetic powder in the magnetic layer increases, so that a magnetic recording medium having high electromagnetic characteristics can be obtained. Heat resisting plastic rolls, e.g., epoxy, polyimide, polyamide, and polyimideamide are used as the calendering treatment rolls. Metal rolls can also be used in calendering treatment.

It is preferred for the magnetic recording medium in the invention to have extremely excellent surface smoothness. Such high smoothness can be obtained by forming a magnetic layer with the specific ferromagnetic powder and binder, as described above, and then subjecting the magnetic layer to calendering treatment. As the conditions of calendering treatment, the temperature of calender rolls is in the range of from 60 to 100°C, preferably from 70 to 100°C, and especially preferably from 80 to 100°C, the pressure is in the range of from 100 to 500 kg/cm (from 98 to 490 kN/m), preferably from 200 to 450 kg/cm (from 196 to 441 kN/m), and especially preferably from 300 to 400 kg/cm (from 294 to 392 kN/m).

As the means for reducing a thermal shrinkage factor, there are a method of performing heat treatment in a web state while handling under low tension, and a method of performing heat treatment of a tape as a pile, e.g., in a bulk state or a state of being encased in a cassette (a thermo treatment method), and both methods can be used in the invention. From the viewpoint of providing a magnetic recording medium of high output and low noise, a thermo treatment method is preferred.

A magnetic recording medium obtained is cut in a desired size with a cutter for use.

### EXAMPLES

The invention will be described more specifically with reference to examples. The components, ratios, procedures and orders can be changed without departing from the spirit and scope of the invention, and it should not be construed that the invention is restricted to the following examples. In the examples "parts" means "mass parts" unless otherwise indicated.

### EXAMPLE 1-1

### 1. Formation of electrically conductive layer

On the side on which a magnetic layer was to be provided of a polyethylene naphthalate film (PEN) support (the Young' s modulus in the machine direction: 8.5 GPa, the Young' s modulus in the cross direction: 6.0 GPa) having a thickness of 5 µm, an electrically conductive layer was formed with a vacuum evaporation apparatus. The surface roughness of the magnetic layer side of the PEN support was 2 nm, and the surface roughness of the reverse side was 6 nm. An electrically conductive layer comprising a partial aluminum oxide having a thickness of 40 nm was formed by a vacuum evaporation method at the maximum incident angle of 60°, a film running rate of 1.5 m/min, and electron gun power of 16 kW while controlling the film temperature of the electrically conductive layer at 210°C. The surface electric resistance of the obtained nonmagnetic support having the electrically conductive layer was from 2.4×10⁴ Ω/□.

### 2. Preparation of magnetic layer coating solution

| | |
|---|---|
| Ferromagnetic acicular metal powder | 100 parts |
| Composition: Fe/Co/Al/Y = 68/20/7/5 (at%) | |
| Surface treating compounds: Al₂O₃ and Y₂O₃ | |
| Crystallite size: 125 Å | |
| Average long axis length: 40 nm | |
| Average acicular ratio: 5 | |
| S_{BET}: 42 m²/g | |
| Coercive force (Hc): 180 kA/m | |
| Saturation magnetization (as): 135 A·m²/kg | |
| Polyurethane resin | 12 parts |
| (branched side chain-containing polyester polyol/diphenylmethane diisocyanate, containing a hydrophilic polar group: -SO₃Na = 70 eq/ton) | |
| Phenylphosphonic acid | 3 parts |
| α-Al₂O₃ (average particle size: 0.1 µm) | 2 parts |
| Carbon black (average particle size: 20 nm) | 2 parts |
| Cyclohexanone | 110 parts |
| Methyl ethyl ketone | 100 parts |
| Toluene | 100 parts |
| Butyl stearate | 2 parts |
| Stearic acid | 1 part |

### 3. Preparation of nonmagnetic layer coating solution

| | |
|---|---|
| Nonmagnetic inorganic powder | 85 parts |
| α-Iron oxide | |
| Surface treating compounds: Al₂O₃ and SiO₂ | |
| Average long axis length: 0.15 µm | |
| Average acicular ratio: 7 | |
| S_{BET}: 50 m²/g | |
| DBP oil absorption amount: 33 ml/100 g | |
| pH: 8 | |
| Electrically conductive carbon black | 20 parts |
| S_{BET}: 250 m²/g | |
| DBP oil absorption amount: 120 ml/100 g | |
| pH: 8 | |
| Volatile content: 1.5% | |
| Polyurethane resin | 12 parts |
| (branched side chain-containing polyester polyol/diphenylmethane diisocyanate, containing a hydrophilic polar group: -SO₃Na = 70 eq/ton) | |
| Acrylic resin | 6 parts |
| (benzyl methacrylate/diacetone acrylamide, containing a hydrophilic polar group, -SO₃Na = 60 eq/ton) | |
| Phenylphosphonic acid | 3 parts |
| α-Al₂O₃ (average particle size: 0.2 µm) | 1 part |
| Cyclohexanone | 140 parts |
| Methyl ethyl ketone | 170 parts |
| Butyl stearate | 2 parts |
| Stearic acid | 1 part |

With each of the magnetic layer (upper layer) coating solution and the nonmagnetic layer (lower layer) coating solution, the components were kneaded in an open kneader for 60 minutes, and then dispersed in a sand mill for 120 minutes. Six parts of a trifunctional low molecular weight polyisocyanate compound (Coronate 3041, manufactured by Nippon Polyurethane Industry Co., Ltd.) was added to each resulting dispersion, each solution was further blended by stirring for 20 minutes, and then filtered through a filter having an average pore diameter of 1 µm, whereby a magnetic coating solution and a nonmagnetic coating solution were obtained.

The nonmagnetic coating solution was coated on the electrically conductive layer of the nonmagnetic support in a dry thickness of 1.8 µm, and immediately after that the magnetic coating solution was simultaneously multilayer coated in a dry thickness of 0.1 µm. While both layers were still wet, magnetic field orientation was performed with a 300 mT magnet. After drying, the coated sample was subjected to calendering treatment through a calender of seven stages consisting of metal rolls alone at 90°C, a rate of 100 m/min, and linear pressure of 300 kg/cm (294 kN/m), subjected to heat treatment at 70°C for 48 hours, and then slit to 1/2 inch wide to obtain a magnetic tape.

### EXAMPLE 1-2

The magnetic coating solution was coated on the electrically conductive layer of the nonmagnetic support in a dry thickness of 0.1 µm. While the magnetic layer was still wet, magnetic field orientation was performed with a 300 mT magnet. After drying, the coated sample was subjected to calendering treatment through a calender of seven stages consisting of metal rolls alone at 90°C, a rate of 100 m/min, and linear pressure of 300 kg/cm (294 kN/m), subjected to heat treatment at 70°C for 48 hours, and then slit to 1/2 inch wide to obtain a magnetic tape.

### EXAMPLE 1-3

A magnetic tape was manufactured in the same manner as in Example 1-1, except that carbon black was extruded from the nonmagnetic layer coating solution.

### EXAMPLE 1-4

A magnetic tape was manufactured in the same manner as in Example 1-1, except that the surface electric resistance of the electrically conductive layer was changed as shown in Table a below.

### EXAMPLE 1-5

A magnetic tape was manufactured in the same manner as in Example 1-3, except that the surface electric resistance of the electrically conductive layer was changed as shown in Table a below.

### COMPARATIVE EXAMPLES 1-1 TO 1-3

Magnetic tapes were manufactured in the same manner as in Examples 1-1 to 1-3 respectively, except that electrically conductive layers were not provided.

### COMPARATIVE EXAMPLE 1-4

A magnetic tape was manufactured in the same manner as in Example 1-1, except that the material of the electrically conductive layer was changed to Al and the surface electric resistance was changed as shown in Table a.

### COMPARATIVE EXAMPLES 1-5

A magnetic tape was manufactured in the same manner as in Comparative Example 1-4, except that carbon black was extruded from the nonmagnetic layer coating solution.

### EXAMPLES 2-1 TO 2-5, COMPARATIVE EXAMPLES 2-1 TO 2-5

### Preparation of magnetic layer coating solution:

| | |
|---|---|
| Ferromagnetic tabular hexagonal ferrite powder | 100 parts |
| Composition (mole ratio): Ba/Fe/Co/Zn = 1/9/0.2/0.8 | |
| Average tabular size: 27 nm | |
| Average tabular ratio: 3 | |
| S_{BET}: 50 m²/g | |
| Coercive force (Hc): 191 kA/m | |
| Saturation magnetization (as): 60 A·m²/kg | |
| Polyurethane resin | 12 parts |
| (branched side chain-containing polyester | |
| polyol/diphenylmethane diisocyanate, | |
| containing a hydrophilic polar group: -SO₃Na = 70 eq/ton) | |
| Phenylphosphonic acid | 3 parts |
| α-Al₂O₃ (average particle size: 0.15 µm) | 2 parts |
| Carbon black (average particle size: 20 nm) | 2 parts |
| Cyclohexanone | 110 parts |
| Methyl ethyl ketone | 100 parts |
| Toluene | 100 parts |
| Butyl stearate | 2 parts |
| Stearic acid | 1 part |

Magnetic tapes were manufactured by repeating the procedures in Examples 1-1 to 1-5 and Comparative Examples 1-1 to 1-5 respectively, except that the above magnetic layer coating solution was used.

### Measuring methods:

### 1. Measurement of surface electric resistance

A measuring sample was prepared by cutting the nonmagnetic support having each electrically conductive layer in a size of 12.65 mm wide and 10 cm long. With a digital surface electric resistance meter TR-8611A (manufactured by Takeda Riken), the measuring environment is set at 21°C, 50% RH. Two quarter cylindrical metal electrodes having a radius of about 2 cm are put on an insulated horizontal plate at an interval of 12.65 mm, and the measuring sample is put on the plate so that the electrically conductive layer surface is brought into contact with the metal electrode side, and the electric resistance value R (Ω) at the time when a sash weight of 160 g is hung at both ends of the measuring sample is measured. The voltage to be applied between two electrodes is from 100 to 600 V. The surface electric resistance of the electrically conductive layer surface of the nonmagnetic support is found as R Ω/□.

### 2. Measurement of surface roughness (Ra) (support)

Surface roughness was measured with an optical roughness meter HD-2000 (a product of WYKO Co.) at the cutoff value of 0.25 mm, and the arithmetic mean roughness corresponding to Ra described in JIS B0660-1998, ISO4287-1997 was found.

### 3. Measurement of error rate (initial stage, under high humidity and high temperature)

Recording signal was recorded on each tape by 8-10 conversion PR1 equalization system at 23°C, 50% RH, and error rate of the tape was measured under respective environments of 23°C, 50% RH (an initial stage) and 40°C, 80% RH (a high humidity and high temperature condition). In the following Tables a and b, the unit of an error rate is (× 10⁻⁵).

The results of the measurements obtained are shown in Tables a and b below.

**TABLE a**

| Ex. No. | Nonmagnetic Support | | Electrically Conductive Layer | | | | Magnetic Layer | | Constitution of Upper and Lower Layers | Conductive Carbon Black in Lower Layer | Error Rate | |
|---|---|---|---|---|---|---|---|---|---|---|---|---|
| | Mtl. | Thickness (µm) | Provided Side | Material. | Thickness (nm) | Surface Electric Resistance (Ω/□) | Kind | Av. Long Axis Length (nm) | | | Initial | Under High Temp. High Humidity |
| Ex. 1-1 | PEN | 5.0 | Magnetic layer provided side | Aluminum oxide | 40 | 2.4×10⁴ | Fe Alloy | 40 | Upper and lower layers | Yes | 0.28 | 0.65 |
| Ex. 1-2 | PEN | 5.0 | Magnetic layer provided side | Aluminum oxide | 40 | 2.4×10⁴ | Fe Alloy | 40 | Upper layer alone | - | 0.08 | 0.20 |
| Ex. 1-3 | PEN | 5.0 | Magnetic layer provided side | Aluminum oxide | 40 | 2.4×10⁴ | Fe Alloy | 40 | Upper and lower layers | No | 0.12 | 0.27 |
| Ex. 1-4 | PEN | 5.0 | Magnetic layer provided side | Aluminum oxide | 40 | 4.5×10⁹ | Fe Alloy | 40 | Upper and lower layers | Yes | 0.34 | 0.72 |
| Ex. 1-5 | PEN | 5.0 | Magnetic layer provided side | Aluminum oxide | 40 | 4.5×10⁹ | Fe Alloy | 40 | Upper and lower layers | No | 0.23 | 0.50 |
| Comp. 1-1 | PEN | 5.0 | Not provided | - | - | >1.0×10¹² | Fe Alloy | 40 | Upper and lower layers | Yes | 1.23 | 12.74 |
| Comp. 1-2 | PEN | 5.0 | Not provided | - | - | >1.0×10¹² | Fe Alloy | 40 | Upper layer alone | - | 1.56 | 7.61 |
| Comp. 1-3 | PEN | 5.0 | Not provided | - | - | >1.0×10¹² | Fe Alloy | 40 | Upper and lower layers | No | 0.86 | 8.87 |
| Comp. 1-4 | PEN | 5.0 | Magnetic layer provided side | Al | 40 | 0.9×10¹ | Fe Alloy | 40 | Upper and lower layers | Yes | 0.26 | Reproduction impossible. |
| Comp. 1-5 | PEN | 5.0 | Magnetic layer provided side | Al | 40 | 0.9×10¹ | Fe Alloy | 40 | Upper and lower layers | No | 0.09 | Reproduction impossible |

**TABLE b**

| Ex. No. | Nonmagnetic Support | | Electrically Conductive Layer | | | | Magnetic Layer | | Constitution of Upper and Lower Layers | Conductive Carbon Black in Lower Layer | Error Rate | |
|---|---|---|---|---|---|---|---|---|---|---|---|---|
| | Mtl. | Thickness (µm) | Provided Side | material. | Thickness (nm) | Surface Electric Resistance (Ω/□) | Kind | Av. Tabular Size (nm) | | | Initial | Under High Temp. High Humidity |
| Ex. 2-1 | PEN | 5.0 | Magnetic layer provided side | Aluminum oxide | 40 | 2.4×10⁴ | Ba Ferrite | 27 | Upper and lower layers | Yes | 0.29 | 0.63 |
| Ex. 2-2 | PEN | 5.0 | Magnetic layer provided side | Aluminum oxide | 40 | 2.4×10⁴ | Ba Ferrite | 27 | Upper layer alone | - | 0.09 | 0.22 |
| Ex. 2-3 | PEN | 5.0 | Magnetic layer provided side | Aluminum oxide | 40 | 2.4×10⁴ | Ba Ferrite | 27 | Upper and lower layers | No | .16 | 00.23 |
| Ex. 2-4 | PEN | 5.0 | Magnetic layer provided side | Aluminum oxide | 40 | 4.5×10⁹ | Ba Ferrite | 27 | Upper and lower layers | Yes | 0.38 | 0.88 |
| Ex. 2-5 | PEN | 5.0 | Magnetic layer provided side | Aluminum oxide | 40 | 4.5×10⁹ | Ba Ferrite | 27 | Upper and lower layers | No | 0.21 | 0.43 |
| Comp. 2-1 | PEN | 5.0 | Not provided | - | - | >1.0×10¹² | Ba Ferrite | 27 | Upper and lower layers | Yes | 4.56 | 10.98 |
| Comp. 2-2 | PEN | 5.0 | Not provided | - | - | >1.0×10¹² | Ba Ferrite | 27 | Upper layer alone | - | 2.56 | 8.21 |
| Comp. 2-3 | PEN | 5.0 | Not provided | - | - | >1.0×10¹² | Ba Ferrite | 27 | Upper and lower layers | No | 3.56 | 9.68 |
| Comp. 2-4 | PEN | 5.0 | Magnetic layer provided side | Al | 40 | 0.9×10¹ | Ba Ferrite | 27 | Upper and lower layers | Yes | 0.16 | Reproduction impossible. |
| Comp. 2-5 | PEN | 5.0 | Magnetic layer provided side | Al | 40 | 0.9×10¹ | Ba Ferrite | 27 | Upper and lower layers | No | 0.33 | Reproduction impossible |

| | | | | | | | | | | | | |
|---|---|---|---|---|---|---|---|---|---|---|---|---|
| Note: Upper layer means a magnetic layer and lower layer means a nonmagnetic layer. | | | | | | | | | | | | |

As is apparently understood from the above results, the invention can provide a magnetic recording medium having a high S/N ratio capable of achieving excellent areal recording density, little in dropout and low in an error rate by providing a specific electrically conductive layer on the side of a nonmagnetic support on which a magnetic layer is provided, and properly prescribing the surface electric resistance of the surface of the electrically conductive layer. Incidentally, the invention shows conspicuous effect as compared with prior arts (Comparative Examples).

This application is based on Japanese Patent application JP 2005-194906, filed July 4, 2005, the entire content of which is hereby incorporated by reference, the same as if set forth at length.

## Claims

1. A magnetic recording medium comprising:
a nonmagnetic support;
a conductive layer containing at least one material selected from the group consisting of: metals; semimetals; alloys; oxides of metals, semimetals and alloys; and composites of metals, semimetals and alloys; and
a magnetic layer containing ferromagnetic powder and a binder, provided in this order,
wherein a surface of the conductive layer has a surface electric resistance of is from 1×10² Ω/□ to 1×10¹² Ω/□.

2. The magnetic recording medium as claimed in claim 1, wherein the magnetic layer is provided directly on the conductive layer, or the magnetic recording medium further comprises an adhesion assisting layer having a thickness of 0.1 µm or less between the conductive layer and the magnetic layer.

3. The magnetic recording medium as claimed in claim 1, further comprising a nonmagnetic layer containing nonmagnetic powder and a binder provided between the conductive layer and the magnetic layer, wherein the nonmagnetic layer does not substantially contain a conductive carbon black.

4. The magnetic recording medium as claimed in claim 1, wherein the surface electric resistance of the conductive layer is from 1×10³ Ω/□ to 1×10¹¹ Ω/□.

5. The magnetic recording medium as claimed in claim 1, wherein the surface electric resistance of the conductive layer is from 1×10⁴ Ω/□ to 1×10¹⁰ Ω/□.

6. The magnetic recording medium as claimed in claim 1, wherein the conductive layer has a thickness of from 20 to 500 nm.

7. The magnetic recording medium as claimed in claim 1, wherein the conductive layer has a thickness of from 50 to 300 nm.

8. The magnetic recording medium as claimed in claim 1, wherein the conductive layer contains an oxide of a material selected from the metals, the semimetals and the alloys.
